# EUROPÄISCHE PATENTSCHRIFT

(11) **EP 4 065 496 B1**
(45) Veröffentlichungstag und Bekanntmachung des Hinweises auf die Patenterteilung: **05.06.2024**
(21) Anmeldenummer: 20740580.4
(22) Anmeldetag: 10.07.2020
(51) Int. Cl.: B65G 47/244, B65B 35/58

(54) **VORRICHTUNG ZUM WENDEN LÄNGLICHER GEGENSTÄNDE**
APPARATUS FOR TURNING ELONGATE OBJECTS
APPAREIL POUR FAIRE TOURNER DES OBJETS ALLONGÉS

(30) Priorität: 25.11.2019 DE 102019218190
(43) Veröffentlichungstag der Anmeldung: 05.10.2022
(73) Patentinhaber: SOMIC Verpackungsmaschinen GmbH & Co. KG, 83123 Amerang (DE)
(72) Erfinder: ESSBACH, Christian, 83308 Trostberg (DE); RIEGEL, Alexander, 83024 Rosenheim (DE); LIPP, Josef, 83561 Ramerberg (DE)
(74) Vertreter: Weickmann & Weickmann PartmbB
(86) Internationale Anmeldenummer: PCT/EP2020/069571
(87) Internationale Veröffentlichungsnummer: WO 2021/104687

(56) Entgegenhaltungen:
- EP-A1- 0 148 355
- CN-A- 106 429 356
- DE-A1-102010 012 407
- US-A- 3 467 237

## Beschreibung

Die Erfindung betrifft eine Vorrichtung zum Wenden länglicher Gegenstände, deren Höhe höchstens so groß ist wie deren Breite, welche ihrerseits weniger als deren Länge beträgt, aus einer Zuführorientierung, in der die länglichen Gegenstände mit ihrer der Breite entsprechenden Schmalseite voraus gefördert werden, in eine Abführorientierung, in der die länglichen Gegenstände mit ihrer der Länge entsprechenden Langseite voraus gefördert werden.

Derartige Vorrichtungen sind im Stand der Technik beispielsweise im Zusammenhang mit Verpackungsanlagen, insbesondere im Bereich der Lebensmittelindustrie, bekannt. Zum Beispiel offenbaren EP 0 148 355 A1 und US 3,467,237 eine Vorrichtung nach dem Oberbegriff des Anspruchs 1.

Bei der Verpackung länglicher Gegenstände der eingangs genannten Art, vorzugsweise länglicher Gegenstände, deren Länge wenigstens doppelt so groß ist wie deren Breite, beispielsweise Riegeln, insbesondere Schokoriegeln, Müsliriegeln oder dergleichen, ist es üblich, einzelne, vorzugsweise bereits in Folie verpackte, Riegel zunächst in Gruppen mehrerer solcher Riegel zusammenzufassen, um diese im Anschluss daran in einer für den Handel bestimmten Verpackung unterbringen zu können. Es sei jedoch bereits an dieser Stelle darauf hingewiesen, dass, obwohl die Erfindung der einfacheren Darstellung halber teilweise am Beispiel von Riegeln erläutert werden wird, hieraus keine wie auch immer geartete Einschränkung abgeleitet werden kann.

Vor der Verpackung ist es in der Regel erforderlich, die - aufgrund vorheriger Verarbeitungsschritte - eine Zuführorientierung aufweisenden Riegel, in welcher sie mit ihrer der Breite entsprechenden Schmalseite voraus gefördert werden, zum Zwecke der Gruppierung in eine Abführorientierung zu überführen, in welcher die Riegel mit ihrer der Länge entsprechenden Langseite voraus gefördert werden, und in dieser Abführorientierung derart zu gruppieren, dass sie in gewünschter Art und Weise verpackt werden können.

Zum Zwecke der Überführung der Riegel von der Zuführorientierung in die Abführorientierung sind dabei im Stand der Technik gattungsgemäße Wendevorrichtungen vorgeschlagen worden, bei welchen die Riegel oder dergleichen zunächst mit ihrer Schmalseite voraus gegen ein Anschlagelement anlaufen, welches dazu vorgesehen ist, die Riegel abzubremsen, und im Anschluss daran mit einer im Bereich dieses Anschlagelements vorgesehenen Abführeinrichtung, beispielsweise einem Förderband, welche bzw. welches um etwa 90° zu einer Zuführrichtung der Riegel versetzt ist, derart abgeführt werden, dass sie die vorstehend genannte Abführorientierung aufweisen.

Derartige Wendevorrichtungen haben jedoch den Nachteil, dass die Riegel je nach Zuführgeschwindigkeit während des Aufpralls an dem Anschlagelement und der daraus resultierenden abrupten Verzögerung beschädigt werden können, so dass sie ästhetischen Anforderungen nicht mehr genügen und im schlimmsten Fall sogar brechen können. Als Folge hiervon muss zur Vermeidung hoher Ausschussraten die Zuführgeschwindigkeit der Riegel je nach deren Beschaffenheit reduziert werden, was jedoch die maximal möglichen Durchsatzraten solcher Wendevorrichtungen erheblich einschränkt.

Es ist daher Aufgabe der vorliegenden Erfindung, hier Abhilfe zu schaffen.

Diese Aufgabe wird erfindungsgemäß gelöst durch eine Vorrichtung zum Wenden länglicher Gegenstände, deren Höhe höchstens so groß ist wie deren Breite, welche ihrerseits weniger als die Hälfte der Länge beträgt, aus einer Zuführorientierung, in der die länglichen Gegenstände mit ihrer der Breite entsprechenden Schmalseite voraus gefördert werden, in eine Abführorientierung, in der die länglichen Gegenstände mit ihrer der Länge entsprechenden Langseite voraus gefördert werden, die Vorrichtung umfassend eine Zuführeinrichtung, eine Wendeschnecke und eine Abführeinrichtung, wobei die Wendeschnecke wenigstens eine nach radial außen offene und von einer zuführseitigen Begrenzungswandung, einer abführseitigen Begrenzungswandung und einer radial inneren Umfangswand begrenzte Schneckenrille umfasst, wobei sowohl die zuführseitige Begrenzungswandung als auch die abführseitige Begrenzungswandung der wenigstens einen Schneckenrille eine von einem Zuführende zu einem Abführende der Wendeschnecke abnehmende Schneckensteigung aufweisen, wobei eine Zuführstrecke der Zuführeinrichtung seitlich an einen an das Zuführende der Wendeschnecke angrenzenden Zuführabschnitt der Wendeschnecke herangeführt ist, und wobei die Abführeinrichtung dem Abführende der Wendeschnecke zugeordnet ist.

Da die erfindungsgemäße Vorrichtung die Wendeschnecke mit der wenigstens einen daran ausgebildeten Schneckenrille umfasst, werden die an den Zuführabschnitt der Wendeschnecke herangeführten länglichen Gegenstände, insbesondere Riegel, welche die eingangs genannte Zuführorientierung aufweisen, im Wesentlichen allein durch die von dem Zuführende zu dem Abführende der Wendeschnecke abnehmende Schneckensteigung der zuführseitigen Begrenzungswandung und der abführseitigen Begrenzungswandung in die Abführorientierung überführt. Das Wenden der länglichen Gegenstände erfolgt dabei folglich kontinuierlich, nämlich im Wesentlichen durch einen Eingriff ihrer Langseiten mit der zuführseitigen Begrenzungswandung und der abführseitigen Begrenzungswandung der Wendeschnecke. Als Folge hiervon werden Beschädigungen der länglichen Gegenstände auch bei hohen Zuführgeschwindigkeiten wirksam unterbunden. Vorzugsweise weist die Schneckenrille dabei eine Breite auf, die größer als die Breite des länglichen Gegenstandes ist, so dass der längliche Gegenstand beim Durchlaufen der Schneckenrille mit einer seiner Langseiten entweder an der zuführseitigen Begrenzungswandung oder an der abführseitigen Begrenzungswandung anliegt.

Die erfindungsgemäße Vorrichtung eignet sich also insbesondere zur Verarbeitung leicht verformbarer, länglicher Gegenstände wie Riegeln, die vorzugsweise bereits in Folie, beispielsweise in einem Folienschlauch, der an seinen jeweiligen Schmalseiten jeweils miteinander überlappende und versiegelte Enden aufweist, oder dergleichen verpackt sind, jedoch ohne hierauf beschränkt zu sein.

Grundsätzlich muss die wenigstens eine Schneckenrille derart ausgebildet sein, dass ein seitlich an den Zuführabschnitt der Wendeschnecke herangeführter länglicher Gegenstand in den Bereich der Schneckenrille eintreten und mit der zuführseitigen Begrenzungswandung in Eingriff treten bzw. von dieser erfasst werden kann. Um in diesem Zusammenhang auch bei hohen Zuführgeschwindigkeiten einen möglichst störungsfreien seitlichen Eintritt des länglichen Gegenstandes in die Schneckenrille zu ermöglichen, macht die Umfangswinkelposition der abführseitigen Begrenzungswandung der wenigstens einen Schneckenrille an der vom Zuführende abgewandten Seite des Zuführabschnitts der Wendeschnecke in Umfangsrichtung, nach der Erfindung, einen Sprung von wenigstens 180° geteilt durch die Anzahl von Schneckenrillen, also im Fall einer einzigen Schneckenrille einen Sprung von wenigstens 180°.

Ferner ist im Zusammenhang mit der vorliegenden Erfindung zu berücksichtigen, dass auch die zuführseitige Begrenzungswandung während des Eintritts des länglichen Gegenstandes in den Zuführabschnitt nicht im Wege stehen darf. Um dabei dem länglichen Gegenstand genügend Zeit zum Eintreten in den Zuführabschnitt zu lassen, d.h. einen möglichst großen Drehwinkelbereich der Wendeschnecke bereitzustellen, über welchen der Zuführabschnitt nicht oder zumindest nur teilweise von der zuführseitigen Begrenzungswandung versperrt ist, wird gemäß einem weiteren Ausführungsbeispiel der Erfindung vorgeschlagen, dass die Höhe der zuführseitigen Begrenzungswandung zum Zuführende der Wendeschnecke hin abnimmt.

Um der letztgenannten Problematik hinsichtlich des Eintritts des länglichen Gegenstandes in den Zuführabschnitt ferner zu begegnen, kann zusätzlich oder alternativ die zuführseitige Begrenzungswandung erst in einem vorbestimmten Abstand zu dem Zuführende der Wendeschnecke vorgesehen sein. Die Wendeschnecke kann also im Bereich des Zuführendes einen im Wesentlichen rillenfreien Abschnitt aufweisen, welcher weder durch eine zuführseitige Begrenzungswandung noch eine abführseitige Begrenzungswandung begrenzt ist. Dieser rillenfreie Abschnitt kann dabei vorzugsweise einen Durchmesser ausweisen, welcher der radial inneren Umfangswand der wenigstens einen Schneckenrille entspricht.

Grundsätzlich ist bei der seitlichen Zuführung der länglichen Gegenstände zu beachten, dass der durch die Wendeschnecke auf die länglichen Gegenstände zu übertragende Drehwinkel, der zur Überführung von der Zuführorientierung in die Abführorientierung erforderlich ist, umso größer ist, je kleiner der zwischen einer Zuführrichtung der Zuführstrecke unmittelbar vor der Wendeschnecke mit einer Rotationsachse der Wendeschnecke eingeschlossene Winkel ist. Hingegen erhöht sich mit zunehmendem Winkel wiederum das Beschädigungsrisiko der länglichen Gegenstände, da bei Eintritt der länglichen Gegenstände in den Zuführabschnitt ein abrupteres Abbremsen der länglichen Gegenstände in Zuführrichtung erforderlich ist. Gemäß einem weiteren Ausführungsbeispiel wird daher vorgeschlagen, dass die Zuführrichtung der Zuführstrecke unmittelbar vor der Wendeschnecke mit der Rotationsachse der Wendeschnecke einen vorbestimmten Winkel einschließt, der zwischen etwa 20° und etwa 50°, vorzugsweise etwa 35°, beträgt.

In Weiterbildung dieses Ausführungsbeispiels kann der vorbestimmte Winkel zwischen der Zuführrichtung der Zuführstrecke und der Rotationsachse der Wendeschnecke dabei ferner der Schneckensteigung der zuführseitigen Begrenzungswandung an dem Zuführende der Wendeschnecke entsprechen. Als Folge hiervon kann einerseits sichergestellt werden, dass der längliche Gegenstand unmittelbar bei der Erfassung durch die eingangsseitige Begrenzungswandung im Wesentlichen mit seiner gesamten Langseite an dieser Begrenzungswandung anliegt. Andererseits kann dadurch eine - aufgrund des sich zwischen der Langseite des länglichen Gegenstandes und der eingangsseitigen Begrenzungswandung einstellenden Reibeingriffs - auf die länglichen Gegenstände einwirkende Bremskraft erhöht werden, was eine entsprechende Erhöhung der Zuführgeschwindigkeit der länglichen Gegenstände erlaubt.

Ferner kann vorgesehen sein, dass eine Abführrichtung der Abführstrecke unmittelbar nach der Wendeschnecke mit der Rotationsachse der Wendeschnecke einen vorbestimmten Winkel einschließt, der zwischen 0° und etwa 20°, vorzugsweise etwa 10°, beträgt.

Analog kann in Weiterbildung dieses Ausführungsbeispiels der vorbestimmte Winkel zwischen der Abführrichtung der Abführstrecke und der Rotationsachse der Wendeschnecke ferner der Schneckensteigung der abführseitigen Begrenzungswandung an dem Abführende der Wendeschnecke entsprechen. Durch die Anpassung der Schneckensteigung an dem Abführende an den zwischen der Abführrichtung der Abführstrecke und der Rotationsachse der Wendeschnecke vorliegenden Winkel kann schließlich sichergestellt werden, dass die länglichen Gegenstände die eingangs genannte Abführorientierung aufweisen, in der sie mit ihrer Langseite voraus gefördert werden.

Um die länglichen Gegenstände zuverlässig aus der Schneckenrille lösen zu können, kann in Weiterbildung der Erfindung ferner vorgesehen sein, dass die Tiefe der Schneckenrille in einem dem Abführende benachbarten Abschnitt in Richtung auf das Abführende zu, vorzugsweise kontinuierlich, von einem ersten Tiefenwert zu einem zweiten Tiefenwert abnimmt.

Um die Zuführgeschwindigkeit der länglichen Gegenstände und damit die Durchsatzrate der erfindungsgemäßen Vorrichtung noch weiter erhöhen zu können, wird ferner vorgeschlagen, dass der Drehsinn der Wendeschnecke derart gewählt ist und dass die Tiefe der Schneckenrille zumindest im Zuführabschnitt derart bemessen ist, dass die Wendeschnecke mit den länglichen Gegenständen in einen auf diese eine Bremskraft ausübenden Reibeingriff tritt. Handelt es sich in diesem Zusammenhang bei den länglichen Gegenständen um solche, die bereits in Folie verpackt sind, welche beispielsweise eine zur Warenkennzeichnung bestimmten Aufdruck aufweisen, ist jedoch zu berücksichtigen, dass der Reibeingriff nur so stark ausgeprägt sein darf, dass der Aufdruck hierdurch nicht beschädigt wird.

Damit darüber hinaus auch eine Beschädigung der Langseiten der länglichen Gegenstände, insbesondere deren Verpackung, verhindert werden kann, ist es ferner bevorzugt, dass die zuführseitige Begrenzungswandung und/oder die abführseitige Begrenzungswandung eine reibungsarme Oberflächenbeschaffenheit aufweisen, vorzugsweise mit einer reibungsmindernden Beschichtung versehen sind. Die Beschichtung kann hierbei beispielsweise durch Teflonisieren oder dergleichen weitere Beschichtungsverfahren ausgebildet sein.

Wie vorstehend erwähnt, kann es von Vorteil sein, die Tiefe der Schneckenrille zumindest im Zuführabschnitt derart zu bemessen, dass sie mit den länglichen Gegenständen bei deren Eintritt in den Zuführabschnitt in einen auf diese eine Bremskraft ausübenden Reibeingriff tritt. Im weiteren Verlauf der Schneckenrille ist jedoch in der Regel kein Abbremsen der länglichen Gegenstände erforderlich, so dass es zur Verhinderung von Beschädigungen der länglichen Gegenstände zu bevorzugen ist, dass die Tiefe der Schneckenrille im Zuführabschnitt der Wendeschnecke einen kleineren Wert aufweist als im weiteren Verlauf der Wendeschnecke.

Um ferner sicherstellen zu können, dass während des Wendens der länglichen Gegenstände eine Führung derselben in zur Rotationsachse der Wendeschnecke orthogonaler Richtung sichergestellt ist, wird gemäß einem weiteren Ausführungsbeispiel der Erfindung vorgeschlagen, dass auf der der Zuführstrecke zugewandten Seite der Wendeschnecke eine Führungseinheit angeordnet ist, beispielsweise ein Führungsblech oder ein umlaufendes Führungsband.

Zusätzlich oder alternativ ist es hierbei ebenfalls denkbar, dass auf der von der Zuführstrecke abgewandten Seite der Wendeschnecke eine weitere Führungseinheit angeordnet ist, beispielsweise ein Führungsblech oder ein umlaufendes Führungsband. Neben einer zusätzlichen Führung der länglichen Gegenstände kann hierdurch bei besonders hohen Zuführgeschwindigkeiten eine optionale Anschlagmöglichkeit der länglichen Gegenstände bei Eintritt in den Zuführabschnitt bereitgestellt werden, über welche eine gegebenenfalls vorhandene Restgeschwindigkeit in Zuführrichtung kompensiert werden kann. Dies erweist sich insbesondere dann als vorteilhaft, wenn die länglichen Gegenstände bereits in dem vorstehend erläuterten Folienschlauch verpackt sind, da sich dessen an den Schmalseiten ausgebildete Enden bei Kontakt mit der weiteren Führungseinheit zum Zwecke der Energieaufnahme verformen können, ohne das hieraus unerwünschte Auswirkungen auf die Form der länglichen Gegenstände zu befürchten sind. Handelt es sich bei der weiteren Führungseinheit zudem um ein umlaufendes Führungsband, welches vorzugsweise in Förderrichtung der Wendeschnecke verläuft und/oder sich im Wesentlichen mit der Fördergeschwindigkeit der Wendeschecke bewegt, kann eine zwischen den Schmalseiten und dem Führungsband auftretende Reibung reduziert werden.

Zur Steuerung des Betriebs der erfindungsgemäßen Vorrichtung, insbesondere zur Synchronisierung des Betriebs der Zuführeinrichtung, der Wendeschnecke und der Abführeinrichtung, kann die erfindungsgemäße Vorrichtung ferner eine Steuereinheit, welche wenigstens einen Signaleingang zur Erfassung von Sensorsignalen und wenigstens einen Signalausgang zur Ausgabe von Steuersignalen an eine Stelleinheit aufweisen.

Grundsätzlich kann die Steuereinheit dabei zur Steuerung der Zuführung der länglichen Gegenstände mit einer an der Zuführeinrichtung vorgesehenen Schranke oder dergleichen verbunden sein, welche die länglichen Gegenstände jeweils zum richtigen Zeitpunkt für die Förderung längs der Zuführeinrichtung freigibt. Dies hat jedoch den Nachteil, dass hierzu ein körperlicher Eingriff mit den länglichen Gegenständen erforderlich ist, was wiederum eine erhöhte Beschädigungsgefahr nach sich zieht. Zur Begegnung dieses Umstandes wird daher in Weiterbildung der Erfindung vorgeschlagen, dass die Vorrichtung ferner eine Sensoreinheit umfasst, welche mit wenigstens einem Signaleingang der Steuereinheit verbunden und dazu ausgebildet und bestimmt ist, die Position wenigstens eines länglichen Gegenstands längs der Zuführeinrichtung zu erfassen, wobei der wenigstens eine Signalausgang der Steuereinheit mit wenigstens einem Signaleingang eines Antriebsmotors der Wendeschnecke verbunden ist, und wobei die Steuereinheit dazu eingerichtet ist, die Zuführgeschwindigkeit einer Zuführeinheit der Zuführeinrichtung und/oder die Drehzahl der Wendeschnecke derart zu steuern, dass der wenigstens eine längliche Gegenstand den Zuführabschnitt der Wendeschnecke dann erreicht, wenn die zuführseitige Begrenzungswandung den Zuführabschnitt gerade freigegeben hat.

Ferner kann hierzu ein Sensor zur Erfassung der Drehstellung der Wendeschnecke vorgesehen sein.

Um die Zuführung der länglichen Gegenstände zu ermöglichen, kann die Zuführeinrichtung gemäß einem weiteren Ausführungsbeispiel ein Förderband umfassen, auf dem die länglichen Gegenstände aufliegen. Als Folge hiervon kann nicht nur eine zufriedenstellende Gestaltungsfreiheit hinsichtlich eines Zuführpfades der länglichen Gegenstände sichergestellt werden, sondern auch eine je nach gewünschter Durchsatzrate der erfindungsgemäßen Vorrichtung einfach variierbare Zuführgeschwindigkeit bereitgestellt werden.

Sollen die länglichen Gegenstände nach dem Wenden, beispielsweise zum Zwecke einer späteren Verpackung an einer der erfindungsgemäßen Vorrichtung ggf. nachgelagerten Verpackungsstation, in Gruppen vorbestimmter Anzahl gruppiert werden, so ist es ferner zu bevorzugen, dass die die Abführeinrichtung einen Fächersammler umfasst, dessen Fächereinheiten vorzugsweise gruppiert oder gar vollständig unabhängig voneinander angesteuert werden können.

Umfasst die erfindungsgemäße Vorrichtung die vorstehend erläuterte Steuereinheit sowie den Fächersammler, so kann gemäß einer Weiterbildung der Erfindung die Steuereinheit dazu ausgelegt sein, den Fächersammler in Abhängigkeit von der Drehbewegung der Wendeschnecke zu steuern. So kann eine Fächereinheit beispielsweise immer genau so lange im Bereich des Abführendes der Wendeschnecke verharren, bis die Wendeschnecke eine Drehstellung erreicht hat, zu welcher jeweils der nächste längliche Gegenstand gerade an dem Abführende der Wendeschnecke und damit an der Fächereinheit angelangt ist, und dann zum Zwecke der Gruppierung dieses länglichen Gegenstandes hinter den bereits gefüllten Fächereinheiten eingefügt wird.

Um darüber hinaus den Eintritt der länglichen Gegenstände in den Zuführabschnitt der Wendeschnecke noch weiter zu erleichtern, kann die Steuereinheit gemäß einem weiteren Ausführungsbeispiel dazu ausgelegt sein, die Schneckendrehzahl in Abhängigkeit von der Drehstellung der Wendeschnecke zu variieren. So kann die Drehgeschwindigkeit während einer Drehstellung, zu welcher die eingangsseitige Begrenzungswandung den Zuführabschnitt freigibt, geringer sein, als zu einer Drehstellung, zu welcher die eingangsseitige Begrenzungswandung den Zuführabschnitt der Wendeschnecke versperrt. Als Folge hiervon hat der längliche Gegenstand einerseits ein größeres Zeitfenster zum Eintritt in den Zuführabschnitt zur Verfügung und kann andererseits unmittelbar nach dem Eintritt durch die mit nunmehr erhöhter Drehgeschwindigkeit drehende eingangsseitige Begrenzungswandung erfasst werden.

Nicht nur im Zusammenhang mit dem letztgenannten Ausführungsbeispiel ist es von Vorteil, wenn die Wendeschnecke ein geringes Trägheitsmoment aufweist, so dass beispielsweise der Antriebsmotor zum Betreiben der Wendeschnecke entsprechend schlank, d.h. platz-, kosten- und energiesparend ausgelegt sein kann. Gemäß einem weiteren Ausführungsbeispiel der Erfindung können daher die zuführseitige Begrenzungswandung und die abführseitige Begrenzungswandung der Schneckenrille durch zwei entlang der Wendeschnecke ausgebildete Wendel ausgebildet sein. In anderen Worten können die zuführseitige Begrenzungswandung und die abführseitige Begrenzungswandung also jeweils eine aktive Wandfläche aufweisen, welche die wenigstens eine Schneckenrille begrenzt, und eine passive Wandfläche, welche der aktiven Wandfläche entgegengesetzt ist. Vorzugsweise weisen die Wendel entlang ihrer Erstreckung jeweils eine konstante Wandstärke auf. Zusätzlich oder alternativ kann die Wendeschnecke wenigstens abschnittsweise hohl ausgebildet sein.

Im Folgenden wird die Erfindung anhand einer Ausführungsform mit Bezug auf die begleitenden Zeichnungen ausführlicher beschrieben werden. Es stellen dar:
- Figur 1: eine Draufsicht eines Ausführungsbeispiels einer erfindungsgemäßen Vorrichtung;
- Figur 2: eine Seitenansicht einer Wendeschnecke der erfindungsgemäßen Vorrichtung einschließlich einer Abwicklung einer Schneckenwendel der Wendeschnecke;
- Figur 3: insgesamt vier Seitenansichten einer alternativen Ausführungsform einer Wendeschnecke der erfindungsgemäßen Vorrichtung in verschiedenen Drehstellungen; und
- Figur 4: eine Seitenansicht einer zweiten Ausführungsform einer Wendeschnecke.

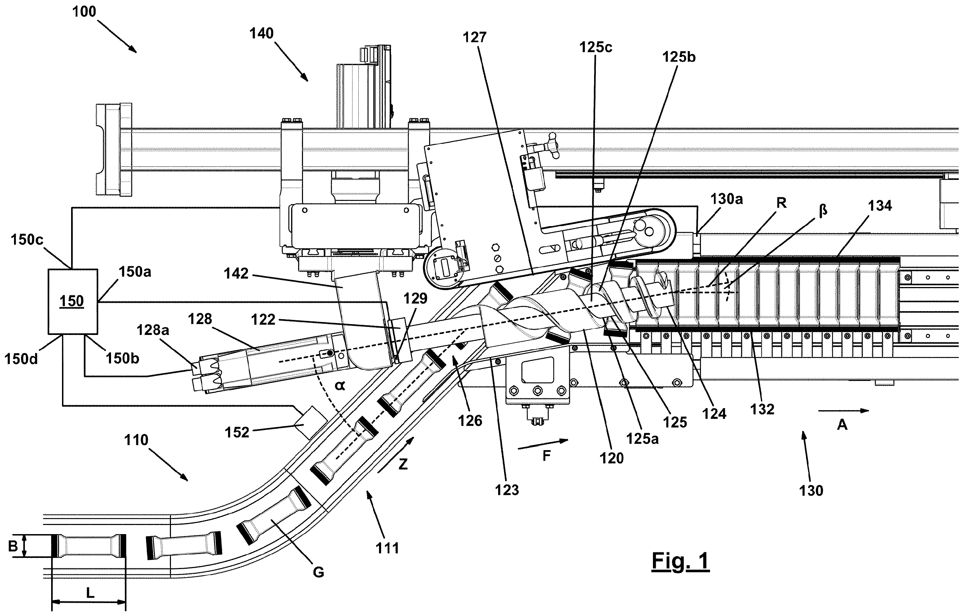

In Figur 1 ist eine erfindungsgemäße Vorrichtung ganz allgemein mit 100 bezeichnet. Die Vorrichtung 100 umfasst eine Zuführeinrichtung 110, welche in dem dargestellten Ausführungsbeispiel als ein Förderband ausgebildet ist. Mittels des Förderbandes 110, welches sich im Betrieb der Vorrichtung 100 in einer Zuführrichtung Z bewegt, werden längliche Gegenstände G zugeführt, die auf dem Förderband 110 aufliegen. Die länglichen Gegenstände G weisen dabei eine Zuführorientierung auf, in der sie mit ihrer der Breite B entsprechenden Schmalseite voraus gefördert werden. Bei den länglichen Gegenständen G handelt es sich in dem vorliegenden Ausführungsbeispiel um handelsübliche zum Verzehr bestimmte Riegel, die in einem Folienschlauch verpackt sind, der an seinen jeweiligen Schmalseiten jeweils miteinander überlappende und versiegelte Enden aufweist.

Die Vorrichtung 100 umfasst ferner eine Wendeschnecke 120 mit einem Zuführende 122 und einem Abführende 124, welcher die länglichen Gegenstände G über eine Zuführstrecke 111 des Förderbandes 110 an einem Zuführabschnitt 126 der Wendeschnecke 120 seitlich zugeführt werden. Die Wendeschnecke 120 kann wenigstens abschnittsweise hohl ausgebildet sein. Die Zuführrichtung Z der Zuführstrecke 111 schließt unmittelbar vor der Wendeschnecke 120 mit einer Rotationsachse R der Wendeschnecke 120 einen Winkel α ein, der im dargestellten Ausführungsbeispiel etwa 35° beträgt. Zum Rotieren der Wendeschnecke 120 um die Rotationachse R ist ein Antriebsmotor 128 vorgesehen, an welchem die Wendeschnecke 120 an ihrem Zuführende 122 angeflanscht ist. An der Verbindungsstelle zwischen dem Antriebsmotor 128 und der Wendeschnecke 120 kann ferner ein Sensor 129 zur Erfassung einer Drehstellung der Wendeschnecke 120 vorgesehen sein. Der Antriebsmotor 128 ist wiederum an einer Halterung 142 angebracht, welche den Antriebsmotor 128 sowie das Antriebsmoment des Antriebsmotors 128 abstützt. Die Halterung 142 kann dabei wiederum an einer dieser übergeordneten Halterung 140, vorzugsweise verstellbar, angebracht sein.

Die Wendeschnecke 120 ist dazu eingerichtet, die länglichen Gegenstände G entlang einer Förderrichtung F zu einer Abführeinrichtung 130 zu fördern und dabei von der Zuführorientierung in eine Abführorientierung zu überführen, in welcher sie mit ihrer der Länge L sprechenden Langseite voraus gefördert werden. Die Förderrichtung F ist dabei im Wesentlichen parallel zu der Rotationsachse R der Wendeschnecke 120. Zur Führung der länglichen Gegenstände G in zur Rotationsachse R bzw. zur Förderrichtung F orthogonaler Richtung ist einerseits an der der Zuführstrecke 111 zugewandten Seite der Wendeschnecke 120 ein Führungsblech 123 angeordnet. Andererseits ist auf der von der Zuführstrecke 111 abgewandten Seite der Wendeschnecke 120 eine weitere Führungseinheit 127 angeordnet, welche in dem dargestellten Ausführungsbeispiel als ein in Förderrichtung F umlaufendes Führungsband ausgebildet ist. Das Führungsband 127 läuft dabei vorzugsweise bei einer Geschwindigkeit, die im Wesentlichen der Fördergeschwindigkeit der länglichen Gegenstände G in der Förderrichtung F entspricht, so dass ein Abgleiten der Schmalseiten der länglichen Gegenstände G an dem Führungsband 127 reduziert, vorzugsweise vollständig unterbunden, ist.

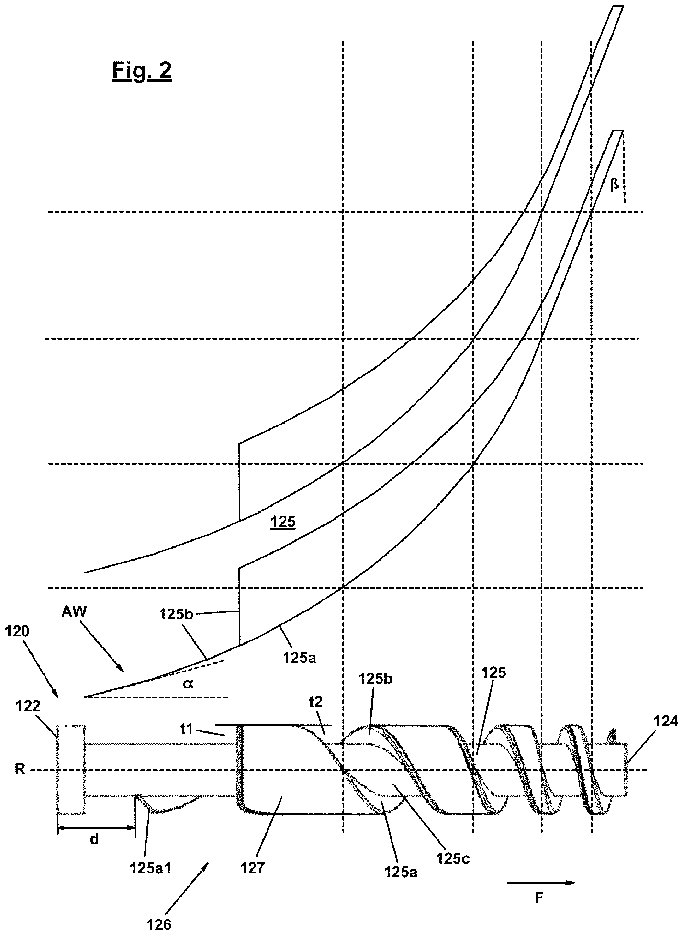

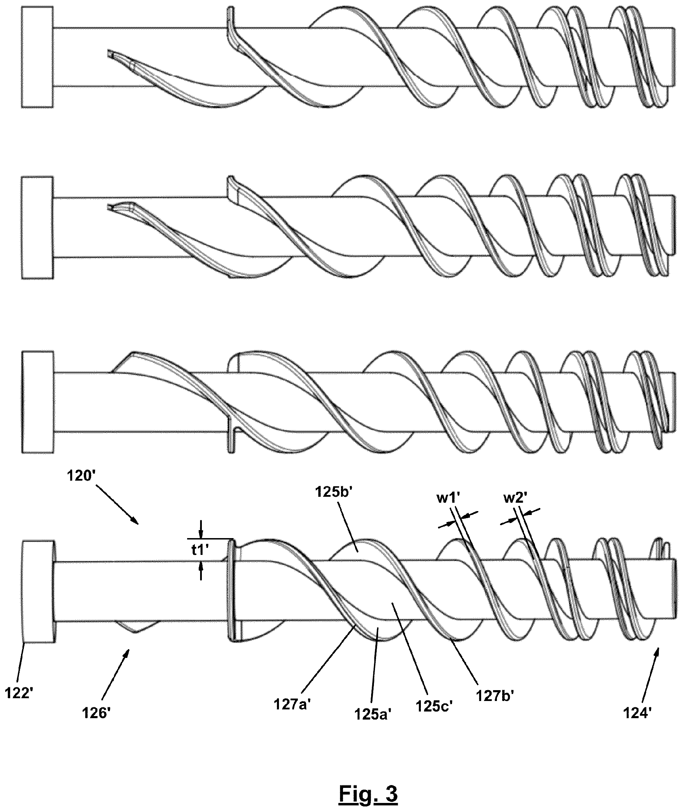

Um die länglichen Gegenstände G dabei von der Zuführorientierung in die Abführorientierung zu überführen, ist an der Wendeschnecke 120 eine von dem länglichen Gegenstand G zu durchlaufende Schneckenrille 125 ausgebildet, die durch eine zuführseitige Begrenzungswandung 125a, eine abführseitige Begrenzungswandung 125b und eine innere Umfangswand 125c begrenzt ist. Sowohl die zuführseitige Begrenzungswandung 125a als auch die abführseitige Begrenzungswandung 125b, welche jeweils dazu vorgesehen sind, mit den Langseiten des länglichen Gegenstandes G in Eingriff zu treten, können ferner mit einer reibungsmindernden Beschichtung versehen, beispielsweise teflonisiert, sein. Die Geometrie der Schneckenrille 125 wird im Folgenden mit Bezug auf die Figuren 2 und 3 noch näher erläutert werden.

Die Abführeinrichtung 130 ist in dem dargestellten Ausführungsbeispiel als Fächersammler ausgebildet, welcher eine Mehrzahl von Fächereinheiten 132 umfasst, die vorzugsweise gruppiert oder gar vollständig unabhängig voneinander angesteuert bzw. bewegt werden können, so dass ein Gruppieren der länglichen Gegenstände G ermöglicht ist, bevor sie beispielsweise einer der Vorrichtung 100 nachgelagerten Verpackungsvorrichtung (nicht dargestellt) zugeführt werden. Das Abführen der länglichen Gegenstände G erfolgt dabei in einer Abführrichtung A entlang einer Abführstrecke 134, die unmittelbar nach der Wendeschnecke 120 mit der Rotationsachse R der Wendeschnecke 120 einen Winkel β einschließt, der im dargestellten Ausführungsbeispiel etwa 10° beträgt.

Mit Bezug auf Figur 2 wird nun die Wendeschnecke 120 aus Fig. 1, insbesondere die Geometrie der Schneckenrille 125 näher beschrieben werden.

Neben der Wendeschnecke 120 selbst ist in Figur 2 die Abwicklung AW einer Schneckenwendel 127 dargestellt, welche einerseits durch die zuführseitige Begrenzungswandung 125a und andererseits durch abführseitige Begrenzungswandung 125b begrenzt ist. Wie aus der Abwicklung AW ersichtlich, weisen sowohl die zuführseitige Begrenzungswandung 125a als auch die abführseitige Begrenzungswandung 125b eine von dem Zuführende 122 zu dem Abführende 124 der Wendeschnecke 120 abnehmende Schneckensteigung auf. So beträgt in dem dargestellten Ausführungsbeispiel die Schneckensteigung im Bereich des Zuführendes 122 in etwa 35° und in dem Bereich des Abführendes 124 in etwa 10°. In dem vorliegenden Ausführungsbeispiel entspricht die Schneckensteigung im Bereich des Zuführendes 122 also dem vorstehend definierten Winkel α, während hingegen die Schneckensteigung im Bereich des Abführendes 124 dem Winkel β entspricht.

Um einen möglichst störungsfreien seitlichen Eintritt des länglichen Gegenstandes G in die Schneckenrille 125 zu ermöglichen, macht die Umfangswinkelposition der abführseitigen Begrenzungswandung 125b der Schneckenrille 125 an der von dem Zuführende 122 abgewandten Seite des Zuführabschnitts 126 in Umfangsrichtung einen Sprung von 180°.

Um sicherstellen zu können, dass auch die zuführseitige Begrenzungswandung 125a während des Eintritts des länglichen Gegenstandes G in den Zuführabschnitt 126 nicht im Wege steht, nimmt die Höhe der zuführseitigen Begrenzungswandung 125a zu dem Zuführende 122 der Wendeschnecke 120 hin ab, was in Fig. 2 durch einen Auslaufabschnitt 125a1 der zuführseitigen Begrenzungswandung 125a gekennzeichnet ist. Ferner ist zuführseitige Begrenzungswandung 125a erst in einem vorbestimmten Abstand d von dem Zuführende 122 der Wendeschnecke 120 gebildet.

Darüber hinaus kann die Tiefe der Schneckenrille 125 im Zuführabschnitt 126 der Wendeschnecke 120 einen kleineren Wert aufweisen als im weiteren Verlauf der Wendeschnecke 120. Beispielsweise kann die Tiefe der Schneckenrille 125 im Zuführabschnitt 126 der Wendeschnecke 120 einen Wert t₁ betragen, während sie im weiteren Verlauf der Wendeschnecke 120 einen Wert t₂ beträgt, der kleiner als der Wert t₁ ist. Als Folge hiervon ist es möglich, dass die Wendeschnecke 120 im Bereich des Zuführabschnitts 126 mit den länglichen Gegenständen G in einen auf diese eine Bremskraft ausübenden Reibeingriff tritt, während hingegen im weiteren Verlauf nur die zuführseitigen Begrenzungswandung 125a und ggf. die abführseitige Begrenzungswandung 125b mit den Langseiten des länglichen Gegenstandes G eingreifen.

In Fig. 2 ist zur besseren Übersicht ferner ein Abbild AW* der Abwicklung AW eingefügt, welches in etwa um die Breite der Schneckenrille 125 nach oben versetzt ist. In dem Abbild AW* ist die zuführseitige Begrenzungswandung dabei entsprechend durch das Bezugszeichen 125a* und die abführseitige durch das Bezugszeichen 125b* gekennzeichnet.

Ein seitlich an den Zuführabschnitt 126 der Wendeschnecke 120 unter dem Winkel α herangeführter länglicher Gegenstand G, welcher die eingangs genannte Zuführorientierung aufweist, wird folglich den in Fig. 2 durch das Abbild der zuführseitigen Begrenzungswandung 125a* und die abführseitige Begrenzungswandung 125b begrenzten Pfad zurücklegen, welcher der Schneckenrille 125 entspricht, und bei der Förderung in Förderrichtung F derart gewendet werden, dass er die Schneckenrille 125 in der Abführorientierung unter dem Winkel β verlässt, welcher der Schneckensteigung an dem Abführende 124 entspricht. Die Wendeschnecke 120 weist dabei einen bezogen auf ein rechtshändiges Koordinatensystem mathematisch negativen Drehsinn um die Rotationsachse R auf.

Aufgrund des vorstehend beschriebenen Umstandes, dass die Abführrichtung A der Abführstrecke 134 unmittelbar nach der Wendeschnecke 120 mit der Rotationsachse R der Wendeschnecke 120 ebenfalls den Winkel β einschließt, kann der längliche Gegenstand G beim Verlassen der Schneckenrille 125 in eine der in Fig. 1 beschriebenen Fächereinheiten 132 hineinfallen, ohne das hierzu ein weiteres Wenden erforderlich ist, um dann in der Abführorientierung mittels des Fächersammlers 130 in Abführrichtung A abgeführt zu werden.

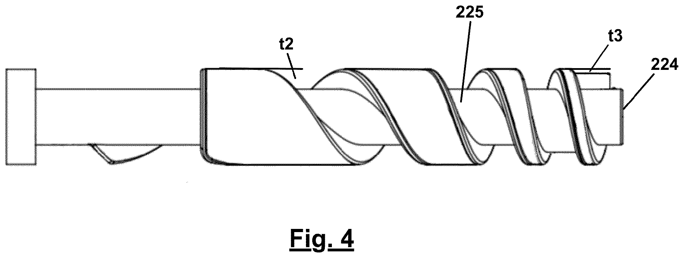

Um hierbei sicherstellen zu können, dass die länglichen Gegenstände zuverlässig aus der Schneckenrille gelöst werden, kann, wie dies in Figur 4 für eine zweite Ausführungsform der Erfindung dargestellt ist, die Tiefe der Schneckenrille 225 in einem dem Abführende 224 benachbarten Abschnitt in Richtung auf das Abführende 224 zu, vorzugsweise kontinuierlich, von einem größeren Tiefenwert t₂ zu einem niedrigeren Tiefenwert t₃ abnehmen.

Unter weiterer Bezugnahme auf Fig. 1 umfasst die Vorrichtung 100 gemäß dem dargestellten Ausführungsbeispiel ferner eine Steuereinheit 150, welcher einerseits über einen Signaleingang 150a mit dem Sensor 129 zur Erfassung der Drehstellung der Wendeschnecke 120 und andererseits über einen Signalausgang 150b mit einem Signaleingang 128a des Antriebsmotors 128 verbunden ist.

Ferner kann die Steuereinheit 150 über einen Signalausgang 150c mit einem Signaleingang 130a des Fächersammlers 130 verbunden sein, um den Fächersammler 130 in Abhängigkeit der Drehbewegung der Wendeschnecke 120 steuern zu können.

Schließlich kann die Vorrichtung 100 ferner eine weitere Sensoreinheit 152 umfassen, welche mit einem Signaleingang 150d der Steuereinheit 150 verbunden und dazu ausgebildet und bestimmt ist, die Position wenigstens eines länglichen Gegenstands G längs des Förderbandes 110, insbesondere der Zuführstrecke 111, zu erfassen, und die Steuereinheit 150 dazu eingerichtet sein, die Geschwindigkeit des Förderbandes 110 und/oder die Drehzahl der Wendeschnecke 120 derart zu steuern, dass der längliche Gegenstand G den Zuführabschnitt 126 der Wendeschnecke 120 dann erreicht, wenn die zuführseitige Begrenzungswandung 125a den Zuführabschnitt 126 gerade freigegeben hat.

Fig. 3 zeigt nun schließlich insgesamt vier Seitenansichten einer alternativen Ausführungsform einer Wendeschnecke 120' in verschiedenen Drehstellungen. Die Wendeschnecke 120' kann analog zu der vorstehend beschriebenen Wendeschnecke 120 an der Vorrichtung 100 angebracht sein. Es ist also möglich, die in der Vorrichtung 100 aus Fig. 1 eingesetzte Wendeschnecke 120 durch die Wendeschnecke 120' zu ersetzen. Darüber hinaus wird die Wendeschnecke 120' im Folgenden nur bezüglich solcher Merkmale beschrieben werden, hinsichtlich derer sie sich von der Wendeschnecke 120 unterscheidet.

Wie in Fig. 3 erkennbar, ist die Schneckenrille 125' durch zwei entlang der Wendeschnecke 120' ausgebildete Wendel 127a' und 127b' ausgebildet. Vorzugsweise weisen die Wendel 127a' und 127b' entlang ihrer Erstreckung jeweils eine konstante Wandstärke w₁' bzw. w₂' auf. In anderen Worten weisen die zuführseitige Begrenzungswandung 125a` und die abführseitige Begrenzungswandung 125b`, jeweils eine aktive Wandfläche auf, welche die wenigstens eine Schneckenrille 125' begrenzt, und eine passive Wandfläche, welche der aktiven Wandfläche entgegengesetzt ist. Als Folge hiervon kann die Wendeschnecke 120' ein gegenüber der Wendeschnecke 120 reduziertes Trägheitsmoment aufweisen. Darüber hinaus kann auch die Wendeschnecke 120' wenigstens abschnittsweise hohl ausgebildet sein.

## Patentansprüche

1. Vorrichtung (100) zum Wenden länglicher Gegenstände (G), deren Höhe höchstens so groß ist wie deren Breite (B), welche ihrerseits weniger als deren Länge (L) beträgt, aus einer Zuführorientierung, in der die länglichen Gegenstände (G) mit ihrer der Breite (B) entsprechenden Schmalseite voraus gefördert werden, in eine Abführorientierung, in der die länglichen Gegenstände (B) mit ihrer der Länge (L) entsprechenden Langseite voraus gefördert werden, die Vorrichtung (100) umfassend:
• eine Zuführeinrichtung (110),
• eine Wendeschnecke (120, 120') und
• eine Abführeinrichtung (130),
wobei die Wendeschnecke (120, 120') wenigstens eine nach radial außen offene und von einer zuführseitigen Begrenzungswandung (125a, 125a'), einer abführseitigen Begrenzungswandung (125b, 125b') und einer radial inneren Umfangswand (125c, 125c') begrenzte Schneckenrille (125, 125') umfasst,
wobei sowohl die zuführseitige Begrenzungswandung (125a, 125a') als auch die abführseitige Begrenzungswandung (125b, 125b') der wenigstens einen Schneckenrille (125, 125') eine von einem Zuführende (122, 122') zu einem Abführende (124, 124') der Wendeschnecke (120, 120') abnehmende Schneckensteigung aufweisen,
wobei die Abführeinrichtung (130) dem Abführende (124, 124') der Wendeschnecke (120, 120') zugeordnet ist,
**dadurch gekennzeichnet, dass** eine Zuführstrecke (111) der Zuführeinrichtung (110) seitlich an einen an das Zuführende (122, 122') der Wendeschnecke (120, 120') angrenzenden Zuführabschnitt (126, 126') der Wendeschnecke (120, 120') herangeführt ist, und dass die Umfangswinkelposition der abführseitigen Begrenzungswandung (125b, 125b') der wenigstens einen Schneckenrille (125, 125') an der vom Zuführende (122, 122') abgewandten Seite des Zuführabschnitts (126, 126') der Wendeschnecke (120, 120') in Umfangsrichtung einen Sprung von wenigstens 180° geteilt durch die Anzahl von Schneckenrillen macht.

2. Vorrichtung nach Anspruch 1,
**dadurch gekennzeichnet, dass** Höhe der zuführseitigen Begrenzungswandung (125a, 125a') zum Zuführende (122, 122') der Wendeschnecke (120, 120') hin abnimmt.

3. Vorrichtung nach Anspruch 1 oder 2,
**dadurch gekennzeichnet, dass** die zuführseitige Begrenzungswandung (125a, 125a') erst in einem vorbestimmten Abstand (d) zu dem Zuführende (122, 122') der Wendeschnecke (120, 120') gebildet ist.

4. Vorrichtung nach einem der Ansprüche 1 bis 3,
**dadurch gekennzeichnet, dass** eine Zuführrichtung (Z) der Zuführstrecke (111) unmittelbar vor der Wendeschnecke (120, 120') mit einer Rotationsachse (R) der Wendeschnecke einen vorbestimmten Winkel (α) einschließt, der zwischen etwa 20° und etwa 50°, vorzugsweise etwa 35°, beträgt.

5. Vorrichtung nach einem der Ansprüche 1 bis 4,
**dadurch gekennzeichnet, dass** eine Abführrichtung (A) einer Abführstrecke (134) unmittelbar nach der Wendeschnecke (120, 120') mit der Rotationsachse (R) der Wendeschnecke (120, 120`) einen vorbestimmten Winkel (β) einschließt, der zwischen 0° und etwa 20°, vorzugsweise etwa 10°, beträgt.

6. Vorrichtung nach einem der Ansprüche 1 bis 5,
**dadurch gekennzeichnet, dass** der Drehsinn der Wendeschnecke (120, 120') derart gewählt ist und dass die Tiefe (t₁, t₁') der Schneckenrille (125, 125') zumindest im Zuführabschnitt (126, 126') derart bemessen ist, dass die Wendeschnecke (120, 120') mit den länglichen Gegenständen (G) in einen auf diese eine Bremskraft ausübenden Reibeingriff tritt.

7. Vorrichtung nach einem der Ansprüche 1 bis 6,
**dadurch gekennzeichnet, dass** die zuführseitige Begrenzungswandung (125a, 125a') und/oder die abführseitige Begrenzungswandung (125b, 125b') eine reibungsarme Oberflächenbeschaffenheit aufweisen, vorzugsweise mit einer reibungsmindernden Beschichtung versehen sind.

8. Vorrichtung nach einem der Ansprüche 1 bis 7,
**dadurch gekennzeichnet, dass** die Tiefe (t1) der Schneckenrille im Zuführabschnitt (126, 126') der Wendeschnecke (120, 120') einen kleineren Wert aufweist als im weiteren Verlauf der Wendeschnecke (120, 120').

9. Vorrichtung nach einem der Ansprüche 1 bis 8,
**dadurch gekennzeichnet, dass** auf der der Zuführstrecke (111) zugewandten Seite der Wendeschnecke (120, 120') eine Führungseinheit (123) angeordnet ist, beispielsweise ein Führungsblech (123) oder ein umlaufendes Führungsband.

10. Vorrichtung nach einem der Ansprüche 1 bis 9,
**dadurch gekennzeichnet, dass** auf der von der Zuführstrecke (111) abgewandten Seite der Wendeschnecke (120, 120') eine weitere Führungseinheit (127) angeordnet ist, beispielsweise ein Führungsblech oder ein umlaufendes Führungsband (127).

11. Vorrichtung nach einem der Ansprüche 1 bis 10,
ferner umfassend eine Steuereinheit (150), welche wenigstens einen Signaleingang (150a) zur Erfassung von Sensorsignalen und wenigstens einen Signalausgang (150b) zur Ausgabe von Steuersignalen an eine Stelleinheit (128) aufweist,
und vorzugsweise ferner umfassend
eine Sensoreinheit (152), welche mit wenigstens einem Signaleingang (150d) der Steuereinheit (150) verbunden und dazu ausgebildet und bestimmt ist, die Position wenigstens eines länglichen Gegenstands (G) längs der Zuführeinrichtung (110) zu erfassen,
wobei der wenigstens eine Signalausgang (150b) der Steuereinheit (150) mit wenigstens einem Signaleingang (128a) eines Antriebsmotors (128) der Wendeschnecke (120, 120') verbunden ist, und
wobei die Steuereinheit (150) dazu eingerichtet ist, die Zuführgeschwindigkeit einer Zuführeinheit der Zuführeinrichtung (110) und/oder die Drehzahl der Wendeschnecke (120, 120') derart zu steuern, dass der wenigstens eine längliche Gegenstand (G) den Zuführabschnitt (126, 126') der Wendeschnecke (120, 120') dann erreicht, wenn die zuführseitige Begrenzungswandung (125a, 125a') den Zuführabschnitt (126, 126') gerade freigegeben hat.

12. Vorrichtung nach einem der Ansprüche 1 bis 11,
**dadurch gekennzeichnet dass** ein Sensor (129) zur Erfassung der Drehstellung der Wendeschnecke (120, 120') vorgesehen ist.

13. Vorrichtung nach einem der Ansprüche 1 bis 12,
**dadurch gekennzeichnet, dass** die Zuführeinrichtung ein Förderband (110) umfasst, auf dem die länglichen Gegenstände (G) aufliegen.

14. Vorrichtung nach einem der Ansprüche 1 bis 13,
**dadurch gekennzeichnet, dass** die Abführeinrichtung einen Fächersammler (130) umfasst, dessen Fächereinheiten (132) vorzugsweise gruppiert oder gar vollständig unabhängig voneinander angesteuert werden können.

15. Vorrichtung nach den Ansprüchen 11 und 14 sowie gewünschtenfalls Anspruch 12 oder 13,
**dadurch gekennzeichnet, dass** die Steuereinheit (150) dazu ausgelegt ist, den Fächersammler (130) in Abhängigkeit von der Drehbewegung der Wendeschnecke (120, 120') zu steuern.

16. Vorrichtung nach Anspruch 11 und gewünschtenfalls einem der Ansprüche 12 bis 15,
**dadurch gekennzeichnet, dass** die Steuereinheit (150) dazu ausgelegt ist, die Schneckendrehzahl in Abhängigkeit von der Drehstellung der Wendeschnecke (120, 120') zu variieren.

17. Vorrichtung nach einem der Ansprüche 1 bis 16,
**dadurch gekennzeichnet, dass** die zuführseitige Begrenzungswandung (125a, 125a') und die abführseitige Begrenzungswandung (125b, 125b') der Schneckenrille (125, 125') durch zwei entlang der Wendeschnecke (120') ausgebildete Wendel (127a', 127b') ausgebildet sind und/oder dass die Wendeschnecke (120, 120') wenigstens abschnittsweise hohl ausgebildet ist.

18. Vorrichtung nach einem der Ansprüche 1 bis 17,
**dadurch gekennzeichnet, dass** die Tiefe der Schneckenrille (225) in einem dem Abführende (224) benachbarten Abschnitt in Richtung auf das Abführende (24) zu, vorzugsweise kontinuierlich, von einem ersten Tiefenwert (t₂) zu einem zweiten Tiefenwert (t₃) abnimmt.

## Claims

1. Apparatus (100) for turning elongate objects (G) of which the height is at most as great as their width (B), which in turn is less than their length (L), out of a
feed orientation, in which the elongate objects (G) are conveyed with their narrow side, corresponding to the width (B), facing forward, into a discharge orientation, in which the elongate objects (B) are conveyed with their long side, corresponding to the length (L), facing forward, the apparatus (100) comprising:
• a feed device (110),
• a turning worm screw (120, 120') and
• a discharge device (130),
wherein the turning worm screw (120, 120') comprises at least one worm channel (125, 125'), which is open radially outwards and is delimited by a feed side delimiting wall (125a, 125a'), a discharge side delimiting wall (125b, 125b') and a radially inner circumferential wall (125c, 125c'),
wherein both the feed side delimiting wall (125a, 125a') and the discharge side delimiting wall (125b, 125b') of the at least one worm channel (125, 125') have a screw pitch which reduces from a feed end (122, 122') to a discharge end (124, 124') of the turning worm screw (120, 120'),
wherein the discharge device (130) is assigned to the discharge end (124, 124') of the turning worm screw (120, 120'),
**characterized in that** a feed path (111) of the feed device (110) approaches a feed portion (126, 126') of the turning worm screw (120, 120') at the side, which portion adjoins the feed end (122, 122') of the turning worm screw (120, 120'), and
that the circumferential angular position of the discharge side delimiting wall (125b, 125b') of the at least one worm channel (125, 125') on the side of the feed portion (126, 126') of the turning worm screw (120, 120') facing away from the feed end (122, 122') increases, in the circumferential direction, by at least 180° divided by the number of worm channels.

2. Apparatus according to claim 1,
**characterised in that** the height of the feed side delimiting wall (125a, 125a') decreases towards the feed end (122, 122') of the turning worm screw (120, 120').

3. Apparatus according to claim 1 or 2,
**characterised in that** the feed side delimiting wall (125a, 125a') is only formed at a predetermined distance (d) from the feed end (122, 122') of the turning worm screw (120, 120').

4. Apparatus according to any of claims 1 to 3,
**characterised in that** a feed direction (Z) of the feed path (111) directly upstream of the turning worm screw (120, 120') encloses a predetermined angle (α) with an axis of rotation (R) of the turning worm screw, which angle is between approximately 20° and approximately 50°, preferably approximately 35°.

5. Apparatus according to any of claims 1 to 4,
**characterised in that** a discharge direction (A) of a discharge path (134) directly downstream of the turning worm screw (120, 120') encloses a predetermined angle (β) with the axis of rotation (R) of the turning worm screw (120, 120'), which angle is between 0° and approximately 20°, preferably approximately 10°.

6. Apparatus according to any of claims 1 to 5,
**characterised in that** the direction of rotation of the turning worm screw (120, 120') is selected in such a way and **in that** the depth (t₁, t₁') of the worm channel (125, 125') is dimensioned in such a way, at least in the feed portion (126, 126'), that the turning worm screw (120, 120') enters into frictional engagement with the elongate objects (G), which frictional engagement exerts a braking force on said objects.

7. Apparatus according to any of claims 1 to 6,
**characterised in that** the feed side delimiting wall (125a, 125a') and/or the discharge side delimiting wall (125b, 125b') have a low-friction surface finish, preferably are provided with a friction-reducing coating.

8. Apparatus according to any of claims 1 to 7,
**characterised in that** the depth (t₁) of the worm channel in the feed portion (126, 126') of the turning worm screw (120, 120') has a smaller value than further along the turning worm screw (120, 120').

9. Apparatus according to any of claims 1 to 8,
**characterised in that** a guide unit (123), for example a guide sheet (123) or a rotating guide belt, is arranged on the side of the turning worm screw (120, 120') facing the feed path (111).

10. Apparatus according to any of claims 1 to 9,
**characterised in that** a further guide unit (127), for example a guide plate or a rotating guide belt (127), is arranged on the side of the turning worm screw (120, 120') facing away from the feed path (111).

11. Apparatus according to any of claims 1 to 10,
further comprising a control unit (150) which has at least one signal input (150a) for detecting sensor signals and at least one signal output (150b) for outputting control signals to an actuating unit (128), and preferably further comprising
a sensor unit (152) which is connected to at least one signal input (150d) of the control unit (150) and is designed and intended to detect the position of at least one elongate object (G) along the feed device (110),
wherein the at least one signal output (150b) of the control unit (150) is connected to at least one signal input (128a) of a drive motor (128) of the turning worm screw (120, 120'), and
wherein the control unit (150) is configured to control the feed speed of a feed unit of the feed device (110) and/or the rotational speed of the turning worm screw (120, 120') in such a way that the at least one elongate object (G) then reaches the feed portion (126, 126') of the turning worm screw (120, 120') when the feed side delimiting wall (125a, 125a') has just released the feed portion (126, 126').

12. Apparatus according to any of claims 1 to 11,
**characterised in that** a sensor (129) for detecting the rotary position of the turning worm screw (120, 120') is provided.

13. Apparatus according to any of claims 1 to 12,
**characterised in that** the feed device comprises a conveyor belt (110) on which the elongate objects (G) rest.

14. Apparatus according to any of claims 1 to 13,
**characterised in that** the discharge device comprises a compartment collector (130) of which the compartment units (132) can be controlled preferably in groups or even completely independently of one another.

15. Apparatus according to claims 11 and 14 and, if desired, claim 12 or 13,
**characterised in that** the control unit (150) is designed to control the compartment collector (130) on the basis of the rotary movement of the turning worm screw (120, 120').

16. Apparatus according to claim 11 and, if desired, any of claims 12 to 15, **characterised in that** the control unit (150) is designed to vary the worm screw speed on the basis of the rotary position of the turning worm screw (120, 120').

17. Apparatus according to any of claims 1 to 16,
**characterised in that** the feed side delimiting wall (125a, 125a') and the discharge side delimiting wall (125b, 125b') of the turning worm channel (125, 125') are formed by two helices (127a', 127b') formed along the turning worm screw (120') and/or **in that** the turning worm screw (120, 120') is hollow, at least in portions.

18. Apparatus according to any of claims 1 to 17,
**characterised in that** the depth of the worm channel (225) in a portion adjacent to the discharge end (224) decreases in the direction of the discharge end (24), preferably continuously, from a first depth value (t₂) to a second depth value (t₃).

## Revendications

1. Dispositif (100) pour retourner des objets allongés (G), dont la hauteur est au plus aussi grande que leur largeur (B), qui est elle-même inférieure à leur longueur (L), d'une orientation d'alimentation, dans laquelle les objets allongés (G) sont transportés avec leur petit côté correspondant à la largeur (B) en avant, à une orientation d'évacuation, dans laquelle les objets allongés (B) sont transportés avec leur grand côté correspondant à la longueur (L) en avant, le dispositif (100) comprenant :
• un dispositif d'alimentation (110),
• une vis sans fin réversible (120, 120') et
• un dispositif d'évacuation (130),
dans lequel la vis sans fin réversible (120, 120') comprend au moins une rainure de vis (125, 125') ouverte radialement vers l'extérieur et délimitée par une paroi de délimitation côté alimentation (125a, 125a'), une paroi de délimitation côté évacuation (125b, 125b') et une paroi circonférentielle radialement intérieure (125c, 125c'),
dans lequel aussi bien la paroi de délimitation côté alimentation (125a, 125a') que la paroi de délimitation côté évacuation (125b, 125b') de ladite au moins une rainure de vis (125, 125') présente un pas de vis décroissant d'une extrémité d'alimentation (122, 122') à une extrémité d'évacuation (124, 124') de la vis sans fin réversible (120, 120),
dans lequel le dispositif d'évacuation (130) est associé à l'extrémité de sortie (124, 124') de la vis sans fin réversible (120, 120'),
**caractérisé en ce qu'**une ligne d'alimentation (111) du dispositif d'alimentation (110) est amenée latéralement à une section d'alimentation (126, 126') de la vis sans fin réversible (120, 120') adjacente à l'extrémité d'alimentation (122, 122') de la vis sans fin réversible (120, 120), et
**en ce que** la position angulaire circonférentielle de la paroi de délimitation côté sortie (125b, 125b') de ladite au moins une rainure de vis (125, 125') sur le côté de la section d'alimentation (126, 126') de la vis sans fin réversible (120, 120') opposé à l'extrémité d'alimentation (122, 122') fait un saut d'au moins 180° divisé par le nombre de rainures de vis dans la direction circonférentielle.

2. Dispositif selon la revendication 1,
**caractérisé en ce que** la hauteur de la paroi de délimitation côté alimentation (125a, 125a') diminue en direction de l'extrémité d'alimentation (122, 122') de la vis sans fin réversible (120, 120').

3. Dispositif selon la revendication 1 ou 2,
**caractérisé en ce que** la paroi de délimitation côté alimentation (125a, 125a') n'est formée qu'à une distance prédéterminée (d) de l'extrémité d'alimentation (122, 122') de la vis sans fin réversible (120, 120').

4. Dispositif selon l'une des revendications 1 à 3,
**caractérisé en ce qu'**une direction d'amenée (Z) de la ligne d'alimentation (111), immédiatement en amont de la vis sans fin réversible (120, 120'), forme avec un axe de rotation (R) de la vis sans fin réversible un angle prédéterminé (α), compris entre environ 20° et environ 50°, de préférence environ 35°.

5. Dispositif selon l'une des revendications 1 à 4,
**caractérisé en ce qu'**une direction d'évacuation (A) d'une ligne d'évacuation (134) situé immédiatement en aval de la vis sans fin réversible (120, 120') forme avec l'axe de rotation (R) de la vis sans fin réversible (120, 120') un angle prédéterminé (β) compris entre 0° et environ 20°, de préférence environ 10°.

6. Dispositif selon l'une des revendications 1 à 5,
**caractérisé en ce que** le sens de rotation de la vis sans fin réversible (120, 120') est choisi de telle sorte que la profondeur (t₁, t₁') de la rainure de vis (125, 125') est dimensionnée, au moins dans la section d'alimentation (126, 126'), de telle sorte que la vis sans fin réversible (120, 120') entre en prise par frottement avec les objets allongés (G) en exerçant sur eux une force de freinage.

7. Dispositif selon l'une des revendications 1 à 6,
**caractérisé en ce que** la paroi de délimitation côté alimentation (125a, 125a') et/ou la paroi de délimitation côté évacuation (125b, 125b') présentent un état de surface à faible frottement, de préférence sont pourvues d'un revêtement réduisant le frottement.

8. Dispositif selon l'une des revendications 1 à 7,
**caractérisé en ce que** la profondeur (t₁) de la rainure de vis dans la section d'alimentation (126, 126') de la vis sans fin réversible (120, 120') présente une valeur inférieure à celle de la suite de la vis sans fin réversible (120, 120').

9. Dispositif selon l'une des revendications 1 à 8,
**caractérisé en ce qu'**une unité de guidage (123) est disposée sur le côté de la vis sans fin réversible (120, 120') tourné vers la ligne d'alimentation (111), par exemple une tôle de guidage (123) ou une bande de guidage périphérique.

10. Dispositif selon l'une des revendications 1 à 9,
**caractérisé en ce qu'**une autre unité de guidage (127) est disposée sur le côté de la vis sans fin réversible (120, 120') opposé à la ligne d'alimentation (111), par exemple une tôle de guidage ou une bande de guidage périphérique (127).

11. Dispositif selon l'une des revendications 1 à 10,
comprenant en outre une unité de commande (150) qui présente au moins une entrée de signal (150a) pour la saisie de signaux de capteur et au moins une sortie de signal (150b) pour l'émission de signaux de commande à une unité de réglage (128),
et comprenant de préférence en outre
une unité de capteur (152) qui est reliée à au moins une entrée de signal (150d) de l'unité de commande (150) et qui est conçue et destinée à détecter la position d'au moins un objet allongé (G) le long du dispositif d'alimentation (110), dans lequel ledit au moins une sortie de signal (150b) de l'unité de commande (150) est reliée à au moins une entrée de signal (128a) d'un moteur d'entraînement (128) de la vis sans fin réversible (120, 120'), et
dans lequel l'unité de commande (150) est conçue pour commander la vitesse d'alimentation d'une unité d'alimentation du dispositif d'alimentation (110) et/ou la vitesse de rotation de la vis sans fin réversible (120, 120') de telle sorte que ledit au moins un objet allongé (G) atteint la section d'alimentation (126, 126') de la vis sans fin réversible (120, 120') lorsque la paroi de délimitation (125a, 125a') côté alimentation vient de libérer la section d'alimentation (126, 126').

12. Dispositif selon l'une des revendications 1 à 11,
**caractérisé en ce qu'**il est prévu un capteur (129) pour détecter la position de rotation de la vis sans fin réversible (120, 120').

13. Dispositif selon l'une des revendications 1 à 12,
**caractérisé en ce que** le dispositif d'alimentation comprend un tapis roulant (110) sur lequel reposent les objets allongés (G).

14. Dispositif selon l'une des revendications 1 à 13,
**caractérisé en ce que** le dispositif d'évacuation comprend un collecteur à compartiments (130) dont les unités à compartiments (132) peuvent être commandées de préférence de manière groupée, voire totalement indépendante les unes des autres.

15. Dispositif selon les revendications 11 et 14 et éventuellement la revendication 12 ou 13,
**caractérisé en ce que** l'unité de commande (150) est conçue pour commander le collecteur à compartiments (130) en fonction du mouvement de rotation de la vis sans fin réversible (120, 120').

16. Dispositif selon la revendication 11 et, si désiré, l'une des revendications 12 à 15,
**caractérisé en ce que** l'unité de commande (150) est conçue pour faire varier la vitesse de rotation de la vis en fonction de la position de rotation de la vis sans fin réversible (120, 120').

17. Dispositif selon l'une des revendications 1 à 16,
**caractérisé en ce que** la paroi de délimitation côté alimentation (125a, 125a') et la paroi de délimitation côté évacuation (125b, 125b') de la rainure de vis (125, 125') sont formées par deux hélices (127a', 127b') réalisées le long de la vis sans fin réversible (120') et/ou **en ce que** la vis sans fin réversible (120, 120') est creuse au moins par sections.

18. Dispositif selon l'une des revendications 1 à 17,
**caractérisé en ce que** la profondeur de la rainure de vis (225) diminue dans une partie voisine de l'extrémité d'évacuation (224) en direction de l'extrémité d'évacuation (24), de préférence de manière continue, d'une première valeur de profondeur (t₂) à une deuxième valeur de profondeur (t₃).
